# EUROPÄISCHE PATENTSCHRIFT

(11) **EP 0 647 461 B1**
(45) Veröffentlichungstag und Bekanntmachung des Hinweises auf die Patenterteilung: **27.12.1996**
(21) Anmeldenummer: 94114408.1
(22) Anmeldetag: 14.09.1994
(51) Int. Cl.: B01D 46/04

(54) **Filternder Abscheider**
Filtering separator
Séparateur filtrant

(30) Priorität: 12.10.1993 DE 4334699
(43) Veröffentlichungstag der Anmeldung: 12.04.1995
(73) Patentinhaber: Margraf, Adolf, Dipl.-Ing., D-31655 Stadthagen (DE)
(72) Erfinder: Margraf, Adolf, Dipl.-Ing., D-31655 Stadthagen (DE)
(74) Vertreter: Wilcken, Thomas, Dipl.-Ing.

(56) Entgegenhaltungen:
- EP-A- 0 034 645
- EP-A- 0 191 718
- DE-A- 2 147 979
- DE-A- 2 450 751
- GB-A- 2 095 127

## Beschreibung

Die Erfindung bezieht sich auf einen filternder Abscheider, dessen Gehäuse durch eine mit parallelen Reihen von Durchbrechungen versehene Gehäuse-Trennwand in einen Rohgasraum und einen Reingasraum unterteilt ist, wobei den Durchbrechungen zugeordnet sind die Anschlußöffnungen von im Rohgasraum plazierten Filterelementen, deren Filtermaterial von außen nach innen von partikelhaltigem Rohgas beaufschlagt und von innen befindlichen Distanzelemeneten gestützt wird, und bei dem im Reingasraum zur Gegenstromabreinigung von Filterelementen unter Abdeckung von zu diesen benachbarten Filterelementen-Anschlußöffnungen eine Kammer mit Druckluftzuleitung über ein Steuerventil zu mindestens einem Injektor zwecks kurzzeitiger, impulsartiger Zufuhr von Druckluft vermischt mit vom Injektor aus dem Reingasraum angesaugten Sekundär-Spülgas zu den jeweils abzureinigenden Filterelementen periodisch und schrittweise an der Gehäuse-Trennwand hin und her verfahrbar ist und die Kammer in einen injektorseitigen Saugraum und einen Druckraum mittels einer Kammer-Trennwand unterteilt ist, wobei die der Gehäuse-Trennwand zugekehrte Wandung des Druckraumes Durchbrechungen aufweist, die mit den Anschlußöffnungen der jeweils abzureinigenden Filterelemente in Überdeckung liegen.

Filternde Abscheider mit vorstehend beschriebenen Merkmalen sind u.a. besonders geeignet für die Abscheidung von nicht zur Agglomeration neigenden Partikeln, deren Durchmesser kleiner ca. 10 µm und deren Sinkgeschwindigkeiten entsprechend gering ist. Die Gründe hierfür liegen in folgenden vorteilhaften Eigenschaften dieser filternden Abscheider.

Die im Reingasraum verfahrbare Kammer verhindert nach der z. B. ca. 0,5 sec. andauernden Gegenstromabreinigung die den Dauerbetrieb eines filternden Abscheiders erheblich erschwerende Wiederanlagerung gerade abgereinigter Partikel geringer Sinkgeschwindigkeit an Filterelemente dadurch, daß die Kammer die Anschlußöffnungen der abgereinigten und der zu diesen benachbart liegenden Filterelemente von dem in Reingasraum herrschenden niedrigen Gasdruck eine für das Absinken der Partikel ausreichend lange Zeitspanne abgetrennt hält, so daß die Partikel in den Raum unterhalb der Filterelemente gelangen und mittels den zum filternden Abscheider gehörenden Vorrichtungen aus dem Gehäuse ausgetragen werden.

Die verfahrbare Kammer verhindert auch, daß das bei der impulsartigen Gegenstromspülung nach außen aufgeblähte Filtermaterial der Filterelemente unmittelbar danach stark beschleunigt auf die Distanzelemente der Filterelemente zurückschlägt, so daß im Filtermaterial verbliebene Partikel nicht in den Reingasraum teppichklopfeffektartig geschleudert werden. Erst wenn die weiterfahrende Kammer mit einer ihrer beiden seitlichen Begrenzungen die Austrittsöffnungen der abgereinigten Filterelemente passiert, werden diese als Folge der geringen Fahrgeschwindigkeit der Kammer schieberartig wieder mit dem Reingasraum verbunden, so daß das vorher aufgeblähte Filtermaterial sich relativ langsam den Stützelementen nähert und relativ sanft sich an diese wieder anlegt.

Voraussetzung für die Nutzung beider vorteilhaften Eigenschaften ist, daß die der Gehäuse-Trennwand zugekehrte Kammerwandung an der Gehäuse-Trennwand während eines Kammerstillstandes ausreichend nahe anliegt.

In der Patentschrift DE 31 11 502 C2 ist ein filternder Abscheider beschrieben, der bei sorgfältiger konstruktiver Ausführung vorstehend erläuterte, positiv zu wertende Effekte erzielen läßt. Nachteilig bei dieser Bauweise sind jedoch deren nachfolgend beschriebene Eigenarten.

Da die verfahrbare Kammer gegenüber dem Reingasraum in sich geschlossen ist, müssen der oder die Injektoren das Sekundär-Spülgas, dessen Volumen ca. 4 bis 5 mal größer sein sollte als das Volumen der entspannten Druckluft, mittels der Injektion von Druckluft über eine relativ kleine Anzahl von Filterelementen ansaugen. Die Injektoren haben deshalb zunächst und zusätzlich den Durchflußwiderstand der betreffenden Filterelemente beim Ansaugen von Sekundär-Spülgas zu überwinden und müssen danach den Druck des Sekundär-Spülgases soweit erhöhen, daß die Gegenstromabreinigung der abzureinigenden Filterelemente gesichert ausreichend wirkungsvoll im Dauerbetrieb stattfindet und der Durchflußwiderstand des filternden Abscheiders die bei dessen Planung vorgegebenen Werte nicht überschreitet. Vorstehenden Aspekt betreffend haben sich bei Einsatz filternder Abscheider, deren Bauweise der oben genannten Patentschrift entsprach, insbesondere Schwierigkeiten ergeben bei Vorhandensein einer höheren Partikelbeladung der Rohgase vor dem filternden Abscheider, z. B. in der Größenordnung von 10 g Partikel geringer Sinkgeschwindigkeit pro m³ und darüber.

Als Folge der höheren Partikelbeladung steigt der Filterelementen-Dur^chflußwiderstand nach einer Gegenstromspülung relativ schnell an, wodurch sich im Dauerbetrieb die bei der Gegenstromabreinigung vom Injektor angesaugte Sekundär-Spülgasmenge verringert. Bei einem in üblicher Weise dimensionierten Abscheider dieser Art läßt man die Kammer deshalb vorbeugend schneller periodisch und schrittweise verfahren, wenn z. B. der Durchflußwiderstand des filternden Abscheiders auf 150 mm WS begrenzt bleiben soll bzw. muß.

Die Verringerung der Zeitspanne für den jeweiligen Kammerhalt zur Gegenstrom-Abreinigung wird jedoch dadurch limitiert, daß bei zu kurzem Kammerhalt nach einer jeweils nur einen Bruchteil einer Sekunde andauernden Gegenstromabreinigung die Partikel mit kleiner Sinkgeschwindigkeit nicht aureichend weit nach unten in Richtung auf die Partikelaustrags-Vorrichtung des filternden Abscheiders absinken können.

Die Konsequenz aus diesen Abhängigkeiten ist, daß z. B. der filternde Abscheider mit einer größeren Filterfläche und/oder die Kammer so breit ausgeführt werden müssen, daß für die Filterung des Rohgases und/oder für das Ansaugen von Sekundär-Spülgas mehr Filterelemente verfügbar sind. Erforderlichenfalls müssen im Saugbereich der Kammer zusätzliche Injektoren installiert werden. Auch der Einbau einer zweiten, verfahrbaren Kammer in den filternden Abscheider käme in Betracht. Sämtliche Maßnahmen haben aber den Nachteil, daß der Bereitstellungsaufwand für den filternden Abscheider und die nicht zur Filtration von Rohgasen verfügbare Filterfläche sowie der Raumbedarf für den filternden Abscheider größer werden. Zusätzlich steigt der Druckluftverbrauch an.

Die Aufgabe der Erfindung besteht deshalb darin, filternde Abscheider der einleitend beschriebenen Bauart so auszubilden, daß unter Beibehaltung seiner Vorteile ohne Vergrößerung der insgesamt benötigten Filterfläche sowie des dieser zugeordneten Zubehörs und damit bei Vermeidung einer Erhöhung des Bereitstellungsaufwandes und des Raumbedarfs zeitweise oder ständig höhere Gehalte des Rohgases an Partikeln geringer Sinkgeschwindigkeit bei akzeptablem Durchflußwiderstand und Druckluftverbrauch vom filternden Abscheider im Dauerbetrieb verläßlich aus den Rohgasen abgeschieden und aus dessen Gehäuse ausgetragen werden.

Diese Aufgabe wird bei einem filternden Abscheider der im Oberbegriff des Anspruches 1 beschriebenen Bauweise dadurch gelöst, daß die den Saugraum der Kammer gegenüber dem Reingasraum abgrenzende Wandung mit mindestens einer Durchbrechung versehen ist, an der sich ein Sperrorgan befindet, das rückschlagventilartig das Ansaugen von Reingas als Sekundär-Spülgas aus dem Reingasraum ermöglicht, eine Gasströmung in umgekehrter Richtung jedoch verhindert.

Die periodisch und schrittweise verfahrbare Kammer ist mit Ausnahme ihrer zur Gehäuse-Trennwand zugekehrten Wandung umgeben vom Reingasraum, durch den ständig Reingas in einer Menge pro Zeiteinheit strömt, die um ein Vielfaches, z. B. 100-fach, größer ist als die kurzzeitig für die Gegenstromspülung benötigte Sekundär-Spülgasmenge.

Ist deshalb die Kammer in einen injektorseitigen, der GehäuseTrennwand zugekehrten Druckraum und einen Saugraum mittels einer Kammer-Trennwand unterteilt, und sind in der den Saugraum gegen-über dem Reingasraum abgrenzenden Wandung eine oder mehrere Öffnungen eingebracht, so kann die für die Gegenstromabreinigung benötigte Sekundär-Spülgasmenge durch diese Öffnungen zu den Saugöffnungen des oder der Injektoren strömen. Die Sekundär-Spülgasmenge muß also nicht über eine relativ kleine Anzahl von Filterelementen unter Überwindung eines von der Partikelmenge im Rohgas beeinflußten Durchfluß-Widerstandes von dem oder den Injektoren angesaugt werden.

Da dem Reingasraum zugekehrte Öffnungen in der Saugraumwandung erfindungsgemäß mit einem Sperrorgan kombiniert sind, das rückschlagventilartig eine Gasströmung vom Saugraum zum Reingasraum und damit auch von den gerade abgereinigten Filterelementen zum Reingasraum verhindert, findet eine Wiederanlagerung von Partikeln einschließlich solcher kleiner Sinkgeschwindigkeit an diese Filterelemente nicht statt. Die bei der Gegenstromabreinigung von den Filterelementen-Flächen entfernten Partikel sinken also in den Raum unterhalb der Filterelemente ab und werden mittels der dafür vorgesehenen Vorrichtungen aus dem Gehäuse des filternden Abscheiders ausgetragen.

Das oder die Sperrorgane sind dabei so ausgebildet, daß sie durch die von dem oder den Injektoren im Saugraum der Kammer erzeugte Druckabsenkung ohne störende Verzögerung geöffnet werden und ohne daß sich bei der danach ausbildenden Einströmung von Reingas als Sekundär-Spülgas in die Saugkammer ein die Menge unzulässig verringernder Durchströmungswiderstand einstellt.

Ein geeignetes Material für solche Sperrorgane ist aufgrund von stattgefundenen Erprobungen z. B. ein einseitig oder beidseitig beschichtetes textiles Material mit einer Wanddicke von z. B. ca. 2 mm, ähnlich dem Filtermaterial der Filterelemente.

Die der Erfindung zugrundeliegende Lehre ermöglicht sowohl die Verwendung nur eines Injektors als auch mehrerer parallel geschalteter Injektoren innerhalb der Kammer. Bei einem filtendern Abscheider mit waagerechten Filterelementen ist ein einzelner Injektor zweckmäßig vertikal in etwa parallel zur Gehäuse-Trennwand, mehrere dagegen, z. B. je ein oder zwei Injektoren pro bei einem Kammerhalt abzureinigenden Filterelement sind horizontal und senkrecht zur Gehäuse-Trennwand angeordnet.

Um zu verhindern, daß nach einer Gegenstromabreinigung sich eine, wenn auch geringe, Gasströmung zum Reingasraum hin zwischen der Gehäuse-Trennwand und der Filterelementen-Öffnungen abdeckenden Wandung der verfahrbaren Kammer ausbilden kann, was die Wiederanlagerung eine Teiles von gerade abgereinigten Partikeln begünstigen würde, ist es vorteilhaft, die Kammerwandung im genannten Bereich aus biegeflexiblem Material, z. B. wiederum aus einem beschichteten textilem Material, zu fertigen. Der sich bei der Gegenstromabreinigung in der Druckkammer gegenüber der Kammerumgebung aufbauende höhere Gasdruck preßt dann die flexible Wandung gegen die Gehäuse-Trennwand. Hierdurch wird erreicht, daß die Kammerwandung sich an die Gehäuse-Trennwand weitgehend anschmiegt und unvermeidbare Unebenheiten der Gehäuse-Trennwand ausgleicht.

Das angestrebte Anliegen der Kammerwand an die Gehäuse-Trennwand kann weiter unter Inkaufnahme eines begrenzten zusätzlichen Aufwandes verbessert werden durch Anordnung eines oder mehrerer aufblasbarer Hohlkörper im Bereich der Randzone der der GehäuseTrennwand zugekehrten flexiblen Druckkammerwandung. Solche Hohlkörper aus einem verformbaren Material sind z. B. aus Silikon gefertigt und an die Druckluftzuleitung zur Kammer vor oder hinter dem Steuerventil angeschlossen. Bei einem Anschluß der Hohlkörper hinter dem Steuerventil blasen sich diese auf beim Beginn der Gegenstromabreinigung und entspannen sich allmählich nach erfolgter Druckluftzufuhr über die in der Druckluftzuleitung vor den Injektoren vorhandenen Austrittsöffnungen, wodurch die die Anlage der Kammerwandung an die Gehäuse-Trennwand verstärkende Druckkraft länger verfügbar ist als bei einer Kammerausführung ohne die zusätzlichen Hohlkörper. Beim anschließenden Verfahren der Kammer ist der zusätzliche Anpreßdruck dann nicht mehr vorhanden.

Werden der oder die Hohlkörper jedoch an die Druckluftzuleitung zur Kammer vor dem Steuerventil angeschlossen, so bleibt der Anpreßdruck der Kammerwandung gegenüber der Gehäuse-Trennwand ständig bestehen. Diese Lösungsalternative kommt in Betracht, wenn in einem besonderen Anwendungsfall die Funktion des filternden Abscheiders von einer dichten Anlage der Kammerwandung an die Gehäuse-Trennwand extrem abhängig ist. Dabei sind dann die Hohlkörper so zu bemessen und anzuordnen, daS der Anpreßdruck das Verfahren der Kammer nicht verhindert, wobei für die flexible Kammerwandung ein Material zu wählen ist, das ausreichend abriebfest ist.

Die Unabhängigkeit der Stärke der Gegenstomspülung von einem zeitweise extrem ansteigenden Partikelgehalt im Rohgas vor dem filternden Abscheider kann zusätzlich verbessert werden durch Anordnung je eines Injektors vor jeder an der Saugkammerwandung angebrachten, mit einem Sperrorgan kombinierten Öffnung, wobei diese Injektoren mit einer eigenen Druckluftzuleitung versehen sind und mit Druckluft beaufschlagt werden, gleichzeitig oder kurzzeitig vor der Druckluftbeaufschlagung des oder der innerhalb der Kammer installierten Injektoren. Durch eine Vorrichtung dieser Art wird das Öffnen der Sperrorgane und damit der Spülgasmengen-Anstieg zu Beginn der Gegenstromabreinigung beschleunigt und das Spülgasvolumen entsprechend vergrößert. Die Abreinigungsvorrichtung des filternden Abscheiders erhält eine zusätzliche Wirkungsreserve.

Nachstehend wird die Erfindung anhand zweier Ausführungsbeispiele der Zeichnung beschrieben.

Es zeigt:

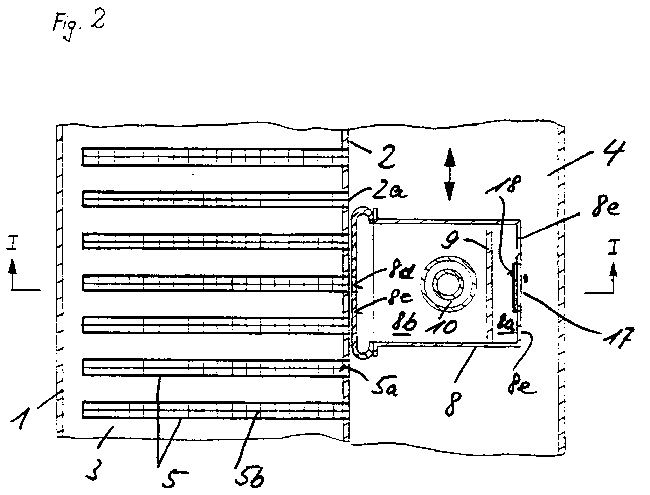

- Figur 1: einen senkrechten Querschnitt durch einen vereinfacht und schematisch dargestellten filternden Abscheider mit einem innerhalb der im Reingasraum verfahrbaren Kammer angeordneten Injektor nach Linie I-I der Figur 2,
- Figur 2: einen horizontalen Querschnitt nach Linie II-II der Figur 1,
- Figur 3: einen senkrechten Querschnitt durch einen filternden Abscheider mit einer Kammer, in der je abzureinigenden Filterelement ein Injektor angeordnet ist nach Linie III-III der Figur 4,
- Figur 4: einen horizontalen Querschnitt nach Linie IV-IV der Figur 3.

In beiden Ausführungsbeispielen sind gleiche Teile mit gleichen Bezugszeichen versehen.

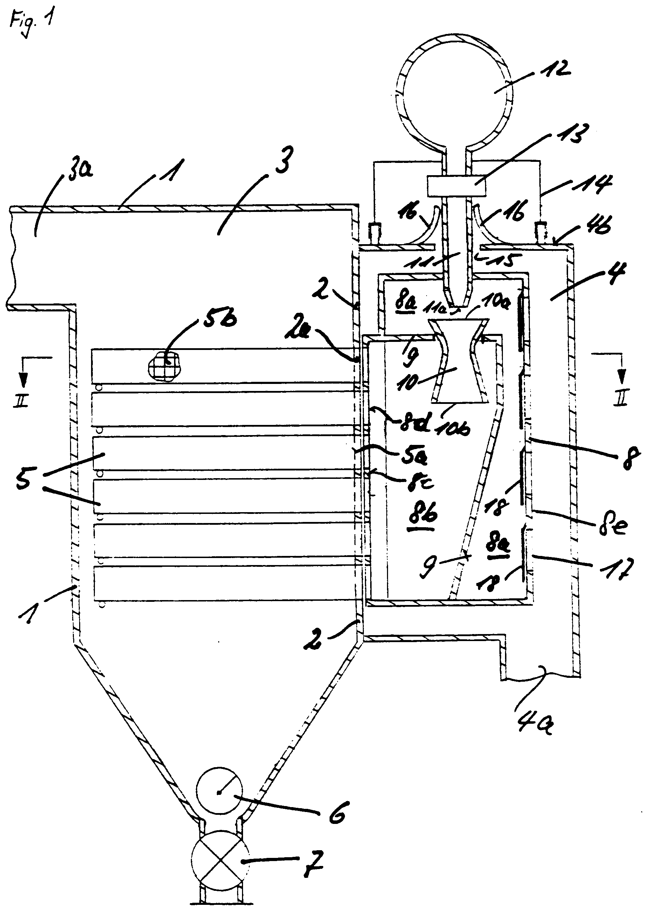

In Figur 1 der Zeichnung ist ein üblicher filternder Abscheider dargestellt, dessen angenähert ovale Filterelemente horizontal angeordnet sind. Der filternde Abscheider besteht aus einem Gehäuse 1, welches mittels einer Trennwand 2 mit Durchbrechungen 2a in einen Rohgasraum 3 und einen Reingasraum 4 unterteilt ist. Im Rohgasraum sind die Filterelemente 5 bekannter Art in senkrechten parallelen Reihen angeordnet, deren Anschlußöffnungen 5a in Überdeckung liegen mit den Durchbrechungen 2a der Trennwand 2 und deren Filtermaterial gestützt wird durch Distanzelemente 5b. Der Rohgasraum 3 wird ergänzt durch den Rohgas-Zuströmkanal 3a und der Reingasraum 4 durch den Reingas-Abströmkanal 4a. Unterhalb der Filterelemente ist das Gehäuse 1 trogartig ausgebildet und in seinem unteren Bereich ergänzt durch eine Transportschnecke 6 und eine Schleuse 7 für das Austragen der von den Filterelementen nach unten abgesunkenen Partikel aus dem Gehäuse.

Die im Reingasraum verfahrbare Kammer 8 ist unterteilt in einen Saugraum 8a und ein Druckraum 8b. Der oder die Injektoren 10 sind im Bereich von Durchbrechungen 11 der Kammer-Trennwand 9 so angeordnet, daß die Ansaugöffnung 10a des oder der Injektoren dem Saugraum 8a zugekehrt ist und die Injektor-Austrittsöffnung 10b in den Druckraum 8b einmündet. Die Druckluftzuleitung 11 ist verbunden mit dem Druckluftspeicher 12 und ergänzt durch das Steuerventil 13. Gegenüber jeder Injektor-Ansaugöffnung 10a ist die Druckluftzuleitung 11 jeweils mit einer Druckluft-Austrittsöffnung 11a versehen.

Oberhalb des Reingasraumes 4 befindet sich der schematisch angedeutete Kammerwagen 14. Die obere horizontale Wandung 4b des Reingasraumes 4 ist versehen mit einem Fahrschlitz 15, der beidseitig von biegeflexiblen Dichtlippen 16 verschlossen ist.

Die Kammer 8 wird in bekannter Weise mit Hilfe eines Antriebes periodisch und schrittweise im Reingasraum 4 verfahren und die Dichtlippen 16 halten dabei den Reingasraum 4 gegenüber der Umgebung verschlossen.

Die der Gehäuse-Trennwand 2 zugekehrte Kammerwandung 8c besteht aus biegeflexiblem Material und weist Durchbrechungen 8d auf, die während der Gegenstromabreinigung von Filterelementen 5 mit den Durchbrechungen 2a in der Gehäusetrennwand 2 und den diesen zugeordneten Anschlußöffnungen 5a der Filterelemente 5 in Überdeckung liegen.

An der zum Reingasraum 4 den Saugraum 8a abgrenzenden Wandung 8e befinden sich Durchbrechungen 17, die auf der dem Saugraum 8a zugekehrten Seite der Wandung 8e mit Sperrorganen 18 kombiniert sind.

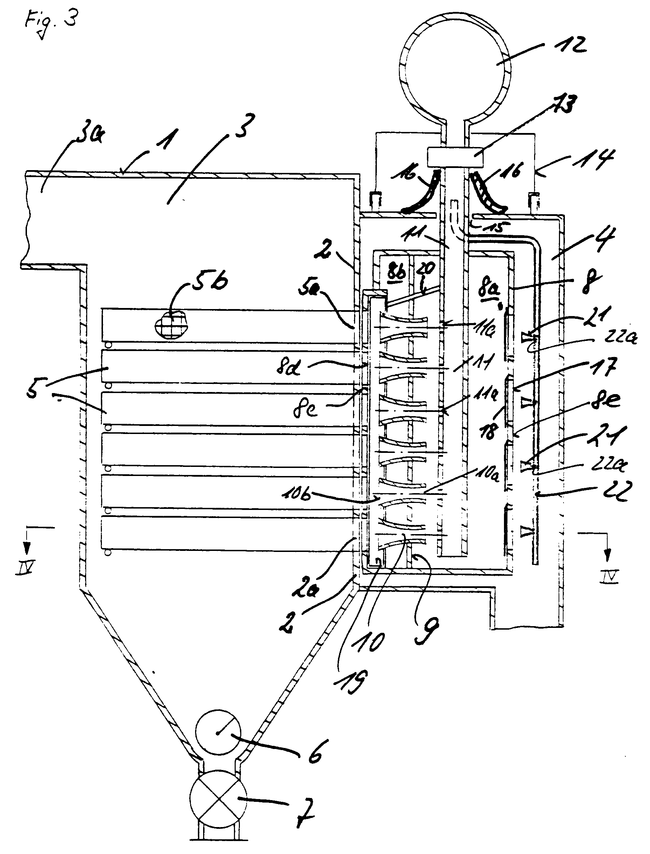

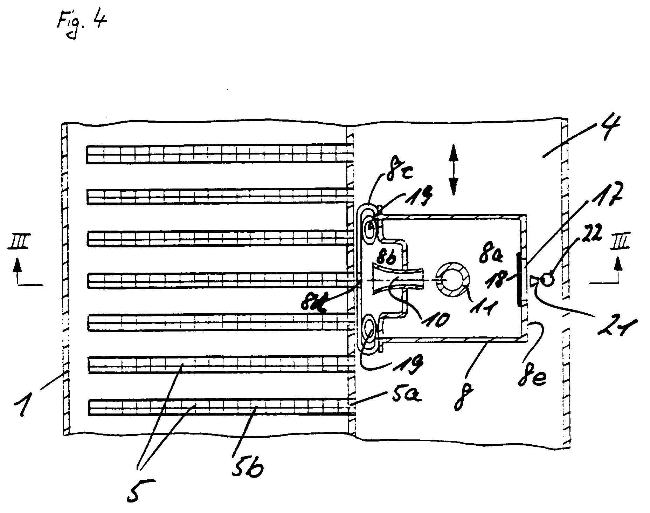

In den Figuren 3 und 4 sind dargestellt die aufblasbaren Hohlkörper 19. Diese können gefertigt sein in einem Stück als aufblasbarer, rechteckiger Rahmen oder auch aus vier Einzelstücken, wobei jeder dieser Hohlkörper einer der vier Randzonen des Druckraumes 8b zugeordnet ist. Die Leitung 20 verbindet den oder die Hohlkörper 19 im dargestellten Beispiel mit der Druckluftzuleitung 11 hinter dem Steuerventil 13.

Ebenfalls in den Figuren 3 und 4 dargestellt sind außerhalb der Kammer 8 vor den Durchbrechungen 17 und denen zugeordneten Sperrorganen 18 zusätzliche Injektoren 21 mit Druckluftzuleitung 22 und Druckluft-Austrittsöffnungen 22a, wobei die Druckluftzuleitung 23a im dargestellten Beispiel an den oberen Bereich der Druckluftzuleitung 11 hinter dem Steuerventil 13 angeschlossen ist.

Erreicht die schrittweise verfahrende Kammer 8 die Filterelementenreihe, die sich neben der zuvor abgereinigten Filterelementenreihe befindet, wird die Weiterfahrt der Kammer unterbrochen. In dieser Position sind die betreffenden Filterelementenöffnungen 5a in Überdeckung mit den Durchbrechungen 8d der biegeflexibel ausgebildeten Kammerwandung 8c. Die beiden benachbarten Filterelementenreihen, also auch die Filterelementenreihe, die zuvor einer Gegenstromabreinigung unterzogen worden ist, werden durch die Kammerwandung 8c verschlossen gehalten. Wird dann das Steuerventil 13 kurzzeitig geöffnet, strömt Druckluft über die Druckluftzuleitung 11 zu den Druckluft-Austrittsöffnungen 11a, so daß die Injektoren 10 kurzzeitig mit einem sich entspannenden Druckluftstrahl beaufschlagt werden. Dabei entsteht im Bereich der Injektor-Ansaugöffnungen ein starker Druckabfall und auch in der Saugkammer 8a fällt der Gasdruck unter den Druckwert ab, der im Reingasraum 4 herrscht. Die rückschlagventilartig ausgebildeten Sperrorgane 18 werden durch den im Reingasraum 4 herrschenden höheren Gasdruck geöffnet und Reingas strömt über die Kammerwand-Durchbrechungen 17 zu den Ansaugöffnungen 10a der Injektoren 10. Der Druck des den oder die Injektoren durchströmende Gasgemisches erhöht sich bis zum Erreichen der jeweiligen Injektor-Austrittsöffnung auf ein Niveau, das eindeutig über dem Gasdruck im Rohgasraum 3 des filternden Abscheiders liegt. Dadurch wird die den Druckraum 8b zur Gehäuse-Trennwand 2 hin begrenzende biegeflexible Kammerwandung 8c dicht an die überdeckten Filterelementen-Anschlußöffnungen gedrückt und das aus Druckluft und Sekundär-Spülgas bestehende Gasgemisch strömt weiter über die Durchbrechungen 8d und 2a sowie die Anschlußöffnungen 5a in die Filterelemente 5 der mittleren von den insgesamt drei überdeckten Filterelementenreihen und bewirkt dort die Gegenstromabreinigung. Als Folge der Beendigung des Druckluftzuflußes durch das Schließen des Steuerventils 13 wird ein Druckausgleich bewirkt, so daß im Kammerdruckraum 8b und im Kammersaugraum 8a der gleiche Druck herrscht wie im Rohgasraum 3. Da der Gasdruck im Reingasraum 4 um den Filter-Differenzdruck niedriger liegt als der Gasdruck im Rohgasraum 3, werden die rückschlagventilartig ausgebildeten Sperrorgane 18 gegen die Ränder der Durchbrechungen 17 gedrückt, so daß eine Gasströmung vom Rohgasraum 3 über die mittels der Gegenstromabreinigung von den angelagerten Partikeln befreiten Filterelementen zum Reingasraum 4 sich nicht ausbilden kann. Da die beiden benachbarten Filterreihen neben der durch Gegenstromabreinigung von Partikeln befreiten Filterreihe ebenfalls von Gas nicht durchströmt werden können, weil deren Anschlußöffnungen 5a von der Kammerwandung 8c verschlossen sind, können die vom Filtermaterial abgetrennten Partikel geringer Sinkgeschwindigkeit nach unten bis zur Transportschnecke 6 absinken und anschließend mittels der Schleuse 7 aus dem Gehäuse 1 ausgetragen werden.

Mit Hilfe der mittels Druckluft aufblasbaren Hohlkörper 19 kann zu Beginn der Gegenstromabreingung der Anpreßdruck der Kammerwandung 8c an die Filterelementen-Anschlußöffnungen 5a verstärkt werden, so daß das aus dem oder den Injektoren ausströmende Gasgemisch ohne jede Leckage zum Reingasraum hin in die Filterelemente einströmen muß, die zwecks Gegenstromabreingung beaufschlagt werden sollen.

Besonders bei höheren Differenzdrücken zwischen Rohgasraum 3 und Reingasraum 4 ist es vorteilhaft, das Öffnen der Sperrorgane 18 zu Beginn der Gegenstromabreingung dadurch zu beschleunigen, daß mit Hilfe der zusätzlichen Druckluftzuleitung 22 über an dieser angebrachten Öffnungen 22a ein Teil der zur Verwendung kommenden Druckluft außen vor den Sperrorganen 18 plazierte Injektoren 21 beaufschlagt, so daß der sich dabei ausbildende Gasstrahl, wiederum bestehend aus einem Gemisch aus Druckluft und Reingas, das Öffnen der Sperrorgane 18 durch Anblasen von außen unterstützt.

Hinsichtlich der Druckluftversorgung der aufblasbaren Hohlkörper ist auch eine aufwendigere Lösung möglich, bei der die Druckluftzuleitung zu den Hohlkörpern über ein gesondertes zusätzliches Steuerventil mit dem Druckluftspeicher verbunden ist. Das Steuerventil ist jeweils bei einem Kammerhalt geöffnet, bei der Weiterfahrt der Kammer geschlossen und wobei das Steuerventil so ausgebildet ist, daß über einen beim Schließen des Steuerventils sich öffnenden Entlüftungsstutzen die in den Hohlkörpern befindliche Druckluft sich auf ein in etwa dem atmosphärischen Druck entsprechendes Niveau entspannen kann.

Unter Inkaufnahme des dabei erforderlichen zusätzlichen Aufwandes ist es darüber hinaus möglich, auch die Druckluftzuleitung zu den zusätzlichen außerhalb der verfahrbaren Kammer angeordneten Injektoren über ein weiteres gesondertes Steuerventil an den Druckluftspeicher anzuschließen. Die Steuerung dieses Ventiles erfolgt dann so, daß die kurzzeitige Druckluftzufuhr zu den außerhalb der Kammer befindlichen Injektoren z. B. ca. 0,1 sec vor der Druckluftzufuhr zu dem oder den innerhalb der Kammer angeordneten Injektoren beginnt.

## Patentansprüche

1. Filternder Abscheider, dessen Gehäuse durch eine mit parallelen Reihen von Durchbrechungen (2a) versehene Gehäuse-Trennwand (2) in einen Rohgasraum (3) und einen Reingasraum (4) unterteilt ist, wobei den Durchbrechungen zugeordnet sind die Anschlußöffnungen (5a) von im Rohgasraum plazierten Filterelementen (5), deren Filtermaterial von außen nach innen von partikelhaltigem Rohgas beaufschlagt und von innen befindlichen Distanzelemeneten (5b) gestützt wird, und bei dem im Reingasraum zur Gegenstromabreinigung von Filterelementen unter Abdeckung von zu diesen benachbarten Filterelementen-Anschlußöffnungen eine Kammer (8) mit Druckluftzuleitung über ein Steuerventil (13) zu mindestens einem Injektor (10) zwecks kurzzeitiger, impulsartiger Zufuhr von Druckluft vermischt mit von diesem angesaugten Sekundär-Spülgas zu den jeweils abzureinigenden Filterelementen periodisch und schrittweise an der Gehäuse-Trennwand hin und her verfahrbar ist und die Kammer in einen injektorseitigen Saugraum (8a) und einen Druckraum (8b) mittels einer Kammer-Trennwand (9) unterteilt ist, wobei die der Gehäuse-Trennwand zugekehrte Wandung des Druckraumes Durchbrechungen (8d) aufweist, die mit den Anschlußöffnungen der jeweils abzureinigenden Filterelemente in Überdeckung liegen
dadurch gekennzeichnet, daß
die den Saugraum (8a) der Kammer (8) gegenüber dem Reingasraum (4) abgrenzende Wandung mit mindestens einer Durchbrechung (17) versehen ist, an der sich ein Sperrorgan (18) befindet, das rückschlagventilartig das Ansaugen von Reingas als Sekundär-Spülgas aus dem Reingasraum (4) ermöglicht, eine Gasströmung in umgekehrter Richtung jedoch verhindert.

2. Filternder Abscheider nach Anspruch 1, dadurch gekennzeichnet, daß die der Gehäusetrennwand (2) zugekehrte Wandung der Kammer (8) aus einem biegeflexiblen Material besteht.

3. Filternder Abscheider nach einem der Ansprüche 1 und 2, dadurch gekennzeichnet, daß im Druckraum (8b) der Kammer (8) im Bereich der Randzone der der Gehäusetrennwand (2) zugekehrten Wandung aufblasbare, an die Druckluftversorgung angeschlossene Hohlkörper (19) angeordnet sind.

4. Filternder Abscheider nach einem oder mehreren der Ansprüche 1 bis 3, dadurch gekennzeichnet, daß außerhalb der Kammer (8) vor jedem Sperrorgan (18) ein Injektor (20) mit Druckluftzufuhr über ein Steuerventil angeordnet ist und die Gasaustrittsöffnung des Injektors (20) dem Sperrorgan (18) zugewandt ist.

## Claims

1. A filtering separator, the housing of which being divided into a crude gas area (3) and a clean gas area (4) by means of a housing dividing wall (2) provided with parallel rows of openings (2a), whereby connecting openings (5a) of filter elements (5) placed in the crude gas area are allocated to said openings, the filter material of said filter elements being impinged on from the outside towards the inside by particle containing crude gas and being supported by spacing elements (5b) located on the inside, and in which a chamber (8) can travel back and forth periodically and stepwise in the clean gas area at the housing dividing wall for reverse flow cleaning of the filter elements whilst shrouding adjacent filter element connecting openings, said chamber with a compressed air supply to at least one injector via a control valve (13) for providing a brief, pulsed supply of compressed air mixed with secondary flush gas drawn from said injector to the respective filter elements to be cleaned, the chamber being divided into a suction area (8a) at the injector side and a pressure area (8b) by means of a chamber dividing wall (9), the wall of the pressure area which faces the housing dividing wall comprising openings (8d) which overlap the connecting openings of the filter elements to be cleaned in each case, characterised in that the wall which separates the suction area (8a) of the chamber (8) from the clean gas area (4) is provided with at least one opening (17) on which there is located a shut-off element (18) which, in the manner of a check valve, permits the drawing of clean gas from the clean gas area (4) into the suction area as a secondary flush gas, but prevents a flow of gas in the reverse direction.

2. A filtering separator according to claim 1, characterised in that the wall of the chamber (8) which faces the housing dividing wall comprises a flexibly bendable material.

3. A filtering separator according to one of claims 1 and 2, characterised in that inflatable hollow bodies (19) connected to the compressed air supply are arranged in the pressure area (8b) of the chamber (8) in the region of the peripheral zone of the wall facing the housing dividing wall (2).

4. A filtering separator according to one or more of claims 1 to 3, characterised in that an injector (20) with a supply of compressed air via a control valve is arranged outside of the chamber (8) in front of each shut-off element (18), and that the gas outlet opening of the injector (20) faces the shut-off element.

## Revendications

1. Séparateur filtrant, dont le boîtier est subdivisé en une chambre à gaz brut (3) et une chambre à gaz purifié (4) par une cloison de boîtier (2) pourvue de rangées parallèles de perçages (2a), perçages auxquels sont adjointes les ouvertures de raccordement (5a) d'éléments filtrants (5) qui sont placés dans la chambre à gaz brut et dont le matériau filtrant est exposé au passage, de l'extérieur vers l'intérieur, d'un gaz brut chargé de particules et est soutenu par des éléments d'écartement (5b) se trouvant à l'intérieur, et dans lequel, pour le nettoyage à contre-courant d'éléments filtrants avec recouvrement des ouvertures de raccordement des éléments filtrants voisins de ces derniers, une enceinte (8), comportant un conduit d'admission d'air comprimé qui mène à au moins un injecteur (10) au travers d'une soupape de commande (13), est déplaçable périodiquement et par pas, dans un sens et dans l'autre, dans la chambre à gaz purifié, le long de la cloison de boîtier, en vue d'un envoi bref, par impulsions, d'air comprimé, mélangé à du gaz de balayage secondaire aspiré par ce dernier, aux éléments filtrants respectifs à nettoyer, et l'enceinte est subdivisée en une chambre d'aspiration (8a), située du côté de l'injecteur, et une chambre de refoulement (8b) au moyen d'une cloison d'enceinte (9), la paroi de la chambre de refoulement, qui est tournée vers la cloison de boîtier, présentant alors des perçages (8d) qui sont placés en coïncidence avec les ouvertures de raccordement des éléments filtrants respectifs à nettoyer,
caractérisé en ce que
la paroi délimitant la chambre d'aspiration (8a) de l'enceinte (8) vis-à-vis de la chambre à gaz purifié (4) est pourvue d'au moins un perçage (17), au niveau duquel se trouve un organe d'obturation (18) qui, à la manière d'une soupape anti-retour, permet l'aspiration de gaz purifié en tant que gaz de balayage secondaire hors de la chambre à gaz purifié (4), mais empêche une circulation de gaz en sens inverse.

2. Séparateur filtrant selon la revendication 1, caractérisé en ce que la paroi de l'enceinte (8), qui est tournée vers la cloison de boîtier (2), est réalisée en un matériau flexible.

3. Séparateur filtrant selon l'une des revendications 1 et 2, caractérisé en ce que des corps creux gonflables (19), raccordés à l'alimentation en air comprimé, sont disposés dans la chambre de refoulement (8b) de l'enceinte (8), au voisinage de la zone des bords de la paroi tournée vers la cloison de boîtier (2).

4. Séparateur filtrant selon une ou plusieurs des revendications 1 à 3, caractérisé en ce qu'un injecteur (21), ayant une admission d'air comprimé qui se fait au travers d'une soupape de commande, est disposé à l'extérieur de l'enceinte (8), devant chaque organe d'obturation (18), et l'ouverture de sortie de gaz de l'injecteur (21) est dirigée vers l'organe d'obturation (18).
